Europäisches Patentamt

European Patent Office

Office européen des brevets

(11) Publication number: **0 392 806**

**A1**

## EUROPEAN PATENT APPLICATION

(21) Application number: **90303856.0**

(22) Date of filing: **10.04.90**

(51) Int. Cl.⁵: **A01N 37/02**

(30) Priority: **12.04.89 GB 8908203**

(43) Date of publication of application:
**17.10.90 Bulletin 90/42**

(84) Designated Contracting States:
**CH DE ES FR IT LI LU**

(71) Applicant: **CERRO CONTINENTAL S.A.**
**Aquilino de la Guardia No. 8**
**Panama City(PA)**

(72) Inventor: **Gomez, Carlos Natalio**
**Misiones 1295**
**Montevideo 11000(UY)**
Inventor: **Markus, Isaac**
**Misiones 1295**
**11000 Montevideo(UY)**
Inventor: **Hirschfeld, Andres**
**Misiones 1295**
**11000 Montevideo(UY)**

(74) Representative: **West, Alan Harry et al**
**R.G.C. Jenkins & Co. 26 Caxton Street**
**London SW1H 0RJ(GB)**

(54) **Pediculicidal compositions and method for combating lice.**

(57) Pediculicidally active compositions comprise as active ingredient a normally solid lipid compound or synthetic equivalent together with an inert additive. The active ingredient is preferably a natural or semisynthetic glyceride or synthetic ester of a higher fatty acid. The compositions are especially suitable for combating lice infestations on the human body.

EP 0 392 806 A1

## PEDICULICIDAL COMPOSITIONS AND METHOD FOR COMBATING LICE

This invention relates to pediculicidal compositions, that is to say compositions which may be used for combating lice, and to methods for combating lice, especially lice which live on the human body.

Various remedies have been proposed over the years for combating lice on the human or animal body, the most successful generally being those employing compounds having known insecticidal properties. Many of these compound, however, are toxic to mammals also and this represents a quite serious disadvantage, especially when it is considered that such compounds must be applied to the head in order to combat head lice and frequently left on the head for some considerable period of time thereby producing a severe risk of absorption of the compounds.

Unfortunately, not all compounds which are known to be effective for controlling other insect species are effective for controlling lice so that it is not a straightforward matter to select for lice control those known insecticides recognised as having a low toxicity to mammals.

Although a number of naturally oily and fatty substances has been proposed in the past as insecticides, none of those substances appears to be especially efficacious as a pediculicide and most have a greater or lesser degree of toxicity towards mammals.

According to the invention, there is provided a pediculicidal composition which comprises as principal active ingredient a normally solid lipid compound or a synthetic equivalent thereof, in admixture with at least one non-pediculicidal additive.

By "a normally solid lipid compound" there is to be understood an ester of a natural, synthetic or semisynthetic (hydrogenated or non-hydrogenated) fatty acid and a polyalcohol or related product, which is generally characterised by its solubility in non-polar solvents and which is essentially non-fluid at normal temperatures, that is to say at up to about 20°C.

The following normally solid natural, semi-synthetic and synthetic lipid compounds may be mentioned by way of example:

(i) natural glycerides, that is to say esters of glycerol and one or more saturated or unsaturated mono-carboxylic acids having from 12 to 26 carbon atoms, preferably 16 or 18 carbon atoms;

(ii) semisynthetic glycerides, obtained by hydrogenation of animal or vegetable oils;

(iii) synthetic esters, for example

(a) esters of glycerol and fatty acids such as palmitic, stearic, isostearic, butyric, caproic, caprylic, capric, lauric and myristic acids;

(b) esters of polyglycerols with stearic and isostearic acids;

(c) esters of $C_{12}$-$C_{18}$ glycerides with stearic and isostearic acids; and

(d) esters of glycerides and polyglycerides.

As examples of natural glycerides (i), there are mentioned animal fats such as tallow, lard, suet, butter and wool fat and vegetable oils such as theobroma oil, almond oil and cocoa butter. Examples of semisynthetic glycerides (ii) are hydrogenated vegetable oils such as corn, maize, soya, safflower, peanut, sunflower and cottonseed oils and hydrogenated animal fats such as tallow, lard and fish oils.

Lipids, as well as esters of fatty acids, are a well defined and readily characterised group of natural materials and further specific exemplification and illustration of particular compounds or groups of compounds is clearly unnecessary since the skilled man will understand immediately or with little difficulty those compounds which may be used according to the invention.

It is important to note that although various proposals have been made in the past regarding the use of some particular oily and fatty natural substances as insect repellents and as ingredients in insecticidal and fungicidal compositions, the present invention is concerned quite specifically with the use of a particular group of lipids which are capable of being used to effect complete control (total eradication) of all types of lice in all stages of their development.

It should be noted also that where previous proposals have been made to use oily and fatty natural substances as insecticidally active materials, those substances have been used as ionic, sulphonated or saponified oils, as oils having chain lengths shorter than 12 carbon atoms or as mere incidental ingredients in formulations containing other active ingredients.

The active ingredients of the compositions according to the invention are natural products or their synthetic equivalents and are therefore either non-toxic to mammals including humans, or have such low toxicity in the quantities required for the control and eradication of lice infestations that they can be considered to be essentially non-toxic. They have the advantage of being readily available at relatively low cost, and indeed many are commercial products in their own rights, which is of significance in the preparation of inexpensive compositions for lice control in less well-developed countries of the world where lice infestations are generally a more significant and widespread problem.

The compositions of the invention are effective against all types of lice and especially against lice which infests the human body, that is to say body lice (Pediculus humanus), head lice (Pediculus capitis) and pubic lice/crab lice (Phthirus Pubis) in all stages of their development. This latter feature is of special significance since many existing pediculicides are ineffective against the eggs of lice with the result that even after successful treatment to remove lice, reinfestation is almost inevitable. The compounds used according to the invention are capable of killing not only adult lice and their larvae but also the eggs, probably as a result of being able to penetrate the eggs by virtue of their oily nature. No evidence is presently available to suggest that lice have or will develop any natural resistance to the action of the lipid compounds used according to the invention.

The compositions of the invention can be formulated to contain various proportions of the lipid compounds, but will generally but not necessarily contain at least 70% of the active ingredient together with one or more other ingredients consistent with the particular method of application intended. For example, compositions for combating head lice may be in the form of creams, balms, lotions, ointments or gels for example, intended exclusively for combating lice. Similarly, compositions for combating body lice or pubic lice may be in the form of creams, balms, lotions, ointments or gels for example.

Such compositions can contain amongst other ingredients conventional additives depending upon the particular formulation. For example, they may contain one or more pharmaceutically or cosmetically acceptable adjuvants such as adhesives, surfactants, diluents, dispersants, dyestuffs, pigments, anti-oxidants, sequestrants and perfumes and fragrances.

In the method of the invention, the compositions are applied thickly to the effected area of the body, for example the scalp (if necessary after being warmed to attain a more fluid consistency) and thoroughly worked into the hair for example, by rubbing or massaging with the fingers in order thoroughly to wet the hair with the composition. The composition may be left in the hair for a sufficient period of time to kill the lice and more especially the eggs, and this period may be from just 30 minutes to several hours. Generally, 100g of the composition will be used for a single application although lesser amounts can be used (depending mainly on the density, length and dryness of the hair), and a treatment time from 30 minutes to minutes, will normally be required In some cases, however, it may be appropriate or convenient to leave the composition in the hair over night. The composition may then be washed out of the hair by rinsing with water, preferably warm water, or by shampooing the hair, and the hair is partially dried by rubbing with a towel and combed to remove not only the dead lice but more importantly the dead eggs. For this purpose, a very fine toothed comb is advantageously used.

The following Examples illustrate the invention.

Example 1

A pediculicidal ointment was prepared by mixing together the following ingredients in the stated quantities:

| | |
|---|---|
| hydrogenated animal fat | 70 g |
| isopropyl myristate | 15 g |
| Polysorbate 80 | 10 g |
| cetyl alcohol | 5 g |
| aromatic oil | 2 g |
| Na$_2$ EDTA | 0.1 g |
| tocopherols | 0.05 g |

Example 2

A second ointment was prepared by mixing together the following ingredients in the stated amounts:

| hydrogenated vegetable oil | 85 g |
|---|---|
| Polysorbate 80 (surfactant) | 10 g |
| cetyl alcohol | 5 g |
| aromatic oil | 0.4 g |
| Na$_2$ EDTA (sequestrant) | 0.1 g |
| tocopherols (antioxidant) | 0.005 g |

Other formulations can be prepared by using instead of the hydrogenated vegetable oil and hydrogenated animal fat utilised above as active ingredients, any other ester of a natural, synthetic or semisynthetic fatty acid and a polyalcohol. In the formulations, it is possible also to use other surfactants such as polyoxyethylene sorbitan monooleate or monostrearate, and other diluents/dispersants such as paraffin, cetostearyl alcohol, lanolin, beeswax, carnauba wax and silicone oils.

**Claims**

1. A pediculicidal composition which comprises as active ingredient a normally solid lipid compound or a synthetic equivalent thereof, in admixture or conjunction with at least one non-pediculicidal physiologically tolerable additive.

2. A composition according to claim 1, wherein the active ingredient is selected from
   (i) natural glycerides, that is to say esters of glycerol and one or more saturated or unsaturated mono-carboxylic acids having from 12 to 26 carbon atoms;
   (ii) semisynthetic glycerides, obtained by hydrogenation of animal or vegetable oils;
   (iii) synthetic esters, for example
      (a) esters of glycerol and fatty acids such as palmitic, stearic, isostearic, butyric, caproic, caprylic, capric, lauric and myristic acids;
      (b) esters of polyglycerols with stearic and isostearic acids;
      (c) esters of C$_{12}$-C$_{18}$ glycerides with stearic and isostearic acids; and
      (d) esters of glycerides and polyglycerides.

3. A composition according to claim 2, wherein the natural glyceride (i) is selected from tallow, lard, suet, butter, wool fat, theobroma oil, almond oil and cocoa butter.

4. A composition according to claim 2, wherein the semisynthetic glyceride (ii) is selected from hydrogenated corn, maize, soya, safflower, peanut, sunflower and cottonseed oils and hydrogenated tallow, lard and fish oils.

5. A composition according to any one of claims 1 to 4, containing up to 100g of active ingredient per unit dosage. .

6. A method for combating lice which comprises applying to their habitat a pediculicidally effective amount of a composition according to any one of claims 1 to 5.

7. A method according to claim 6, wherein the habitat is the surface of the human body.

## DOCUMENTS CONSIDERED TO BE RELEVANT

EP 90303856.0

| Category | Citation of document with indication, where appropriate, of relevant passages | Relevant to claim | CLASSIFICATION OF THE APPLICATION (Int. Cl.⁵) |
|---|---|---|---|
| A | <u>DE - A1 - 2 801 646</u> (BLOCK DRUG CO.) * Claims * | 1,2,6, 7 | A 01 N 37/02 |
| A | <u>EP - A2 - 0 279 523</u> (YISSUM RESEARCH DEVELOPEMENT COMPANY OF THE HEBREW UNIVERSITY OF JERUSALEM) * Claims * | 1,2,6, 7 | |
| A | <u>DE - A1 - 2 436 028</u> (EDUARD GERLACH GMBH CHEMISCHE FABRIK) * Claim 1 * | 1,2,6, 7 | |
| A | <u>DE - A1 - 3 244 098</u> (ICI AUSTRALIA LTD.) * Claims 1,9,10 * | 1,2,6, 7 | |
| | | | TECHNICAL FIELDS SEARCHED (Int. Cl.⁵) |
| | | | A 01 N |

The present search report has been drawn up for all claims

| Place of search | Date of completion of the search | Examiner |
|---|---|---|
| VIENNA | 25-06-1990 | SCHNASS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82